# EUROPÄISCHE PATENTANMELDUNG

(11) **EP 2 503 630 A1**
(43) Veröffentlichungstag der Anmeldung: **26.09.2012**
(21) Anmeldenummer: 11159359.6
(22) Anmeldetag: 23.03.2011
(51) Int. Cl.: H01M 8/02

(54) **Elektrochemische Zelle**

(71) Anmelder: SIEMENS AKTIENGESELLSCHAFT, 80333 München (DE)
(72) Erfinder: Brandt, Torsten, 91301, Forchheim (DE); Hoffmann, Joachim, 90559, Burgthann (DE); Mattejat, Arno, 91056, Erlangen (DE)

(57) **Zusammenfassung**

Die Erfindung betrifft eine elektrochemische Zelle. Diese elektrochemische Zelle (4) weist einen zwischen zwei Plattenelementen (10, 12) angeordneten Strömungsraum (2) mit einem Strömungseinlass (6) sowie einem Strömungsauslass (8) für ein den Strömungsraum (2) durchströmendes Strömungsmedium auf, wobei zwischen dem Strömungseinlass (6) und dem Strömungsauslass (8) eine Hauptströmungsrichtung (40) des Strömungsmediums ausgebildet ist. Weiter weist eines der Plattenelemente (10) Erhebungen (14) zum Abstützen des Plattenelements (10, 12) am anderen Plattenelement (10, 12) in einer regelmäßigen Gitterstruktur (24) auf, zwischen denen ein Netz von den Strömungsraum (2) durchziehenden Strömungskanälen (28, 30, 32) mit zumindest einer Strömungskanalrichtung (29, 31, 33) verläuft.

Es ist erfindungsgemäß vorgesehen, dass die zumindest eine Strömungskanalrichtung (29, 31, 33) der Strömungskanäle (28, 30, 32) relativ zu der Hauptströmungsrichtung (40) des Strömungsmediums einen von Null Grad abweichenden Winkel (34, 35, 36) einschließt.

## Beschreibung

Die Erfindung betrifft eine elektrochemische Zelle mit einem zwischen zwei Plattenelementen angeordneten Strömungsraum mit einem Strömungseinlass sowie einem Strömungsauslass für ein den Strömungsraum durchströmendes Strömungsmedium, wobei zwischen dem Strömungseinlass und dem Strömungsauslass eine Hauptströmungsrichtung des Strömungsmediums ausgebildet ist und wobei eines der Plattenelemente Erhebungen zum Abstützen des Plattenelements am anderen Plattenelement in einer regelmäßigen Gitterstruktur aufweist, zwischen denen ein Netz von den Strömungsraum durchziehenden Strömungskanälen mit zumindest einer Strömungskanalrichtung verläuft.

Elektrochemische Zellen sind allgemein bekannt, beispielsweise aus http://de.wikipedia.org/wiki/Elektrochemische_Zelle (18.03.2011), und werden unterteilt in galvanische Zellen und Elektrolysezellen.

Eine Elektrolysezelle ist eine Vorrichtung, bei der ein elektrischer Strom eine chemische Reaktion erzwingt, wobei zumindest ein Teil von elektrischer Energie in chemische Energie umgewandelt wird. Eine galvanische Zelle ist eine - zur Elektrolysezelle komplementäre - Vorrichtung zur spontanen Umwandlung von chemischer in elektrische Energie. Eine bekannte Vorrichtung einer solchen galvanischen Zelle ist eine Brennstoffzelle, beispielsweise eine PEM-Brennstoffzelle (Proton Exchange Membrane - Brennstoffzelle oder Polymer Elektrolyt Membrane - Brennstoffzelle) (http://de.wikipedia.org/wiki/Brennstoffzelle, 18.03.2011).

In einer Brennstoffzelle reagieren Wasserstoff (H2) und Sauerstoff (02) an einem Elektrolyten unter Abgabe von Wärme zu elektrischer Energie und Produktwasser, das - zusammen mit auskondensiertem Befeuchtungswasser - aus der Brennstoffzelle ausgetragen werden muss. Dies geschieht durch Ausblasen des Wassers mit überschüssigem Betriebsgas aus der Brennstoffzelle, weshalb ihr mehr Betriebsgas zugeführt wird, als sie für die Reaktion benötigt.

Eine aktive Membrane und die sie umgebenden Elektroden einer PEM-Brennstoffzelle müssen sowohl auf der Anodenseite als auch auf der Kathodenseite gleichmäßig mit Betriebsgasen versorgt werden, um eine über die gesamte aktive Fläche möglichst gleichmäßige Zellaktivität zu erhalten. Bei hohen Leistungsdichten können örtlich ungleichmäßige Aktivitäten zu lokal erhöhten Temperaturen und möglichen Schäden an der Membrane und den Elektroden führen.

Der Eintritt und Austritt bzw. die Durchströmung der beiden Betriebsgase in bzw. durch eine Brennstoffzelle wird durch diskrete Kanäle realisiert, deren Geometrie und Position relativ zu den aktiven Flächen durch konstruktive Rahmenbedingungen nicht immer optimal zu gestalten ist. Daher kommt es in den beiden Gasräumen der Brennstoffzelle zur Ausprägung von Bereichen, die gut durchströmt werden und bei denen der Wasserabtransport gut erfolgt, und anderen Bereichen, so genannten Strömungsschatten, in denen die Strömung nur schwach ausgeprägt ist und das Wasser nicht befriedigend abtransportiert wird. In ungünstigen Fällen kann es durch eingelagerte Wassertropfen zu einer Blockade der Zellfunktion in solchen Strömungsschatten kommen.

In Brennstoffzellen, die mit Betriebsgasen mit inerten Anteilen betrieben werden, wie Reformergas oder Luft, bilden sich in den schlecht durchströmten Bereichen Inertgaspolster aus, die dort lokal die Leistungsfähigkeit der aktiven Komponenten herabsetzen. Die Brennstoffzelle wird dort mit einem Gas betrieben, das eine niedrige Nutzgaskonzentration hat.

Aus der DE 103 00 068 A1 ist eine Brennstoffzelle bekannt, bei der die Gasräume mit länglichen Gasleitelementen versehen sind. Diese leiten die Betriebsgase von einem Gaseinlass zu einem Gasauslass der Gasräume in der Weise, dass sie besonders ansonsten schlecht durchströmte Bereiche durchströmen.

Aus der EP 1 970 985 A1 ist eine Brennstoffzelle bekannt, bei der ein Gasraum ein durch gitterförmig angeordnete Erhebungen ausgebildetes Netz von Strömungskanälen aufweist, welche von einem Strömungsmedium, einem Betriebsgas, durchströmt werden. Gemäß der EP 1 970 985 A1 kann durch Variation von Strömungsquerschnitten der Strömungskanäle die Durchströmung des Gasraums mit dem Strömungsmedium beeinflusst und gelenkt werden.

Es ist eine Aufgabe der vorliegenden Erfindung, eine elektrochemische Zelle, beispielsweise eine galvanische Zelle oder eine Elektrolysezelle, insbesondere eine Brennstoffzelle, anzugeben, bei der die Zelle, insbesondere eine Membran-Elektrolyt-Einheit einer Brennstoffzelle, örtlich besonders gleichmäßig mit Betriebsgas überströmt werden kann.

Diese Aufgabe wird durch eine elektrochemische Zelle der eingangs genannten Art gelöst, bei der die zumindest eine Strömungskanalrichtung der Strömungskanäle relativ zu der Hauptströmungsrichtung des Strömungsmediums einen von Null Grad abweichenden Winkel einschließt. Somit erfolgt bei einer solchen Ausrichtung dieser Strömungskanäle eine nicht parallele An- bzw. Durchströmung des Gasraumes bezüglich der Hauptströmungsrichtung des Strömungsmediums.

Die Erfindung geht hierbei von der Erkenntnis aus, dass eine Ausrichtung der Strömungskanäle bezüglich der Hauptströmungsrichtung des Strömungsmediums eine bedeutende Rolle bei der Medienverteilung im Gasraum und der Durchströmung des Gasraumes spielt. Durch eine Variation eines Relativwinkels zwischen der Richtung von Strömungskanälen und der Hauptströmungsrichtung des Strömungsmediums lässt sich die Durchströmung des Gasraumes beeinflussen bzw. verändern und hin zu einer über den gesamten Gasraum gleichmäßigen Strömung verbessern.

Erfolgt eine Anströmung von Strömungskanälen in bzw. parallel in Richtung dieser Strömungskanäle, d.h. die Ausrichtung der Strömungskanäle ist parallel zur Hauptströmungsrichtung des Strömungsmediums ausgerichtet, so stellt sich eine ungleichmäßige Durchströmung des Gasraumes verbunden mit einem niedrigen Druckabfall ein. Strömungsschatten in Eckbereichen der aktiven Fläche bzw. Gasraums können sich ausbilden.

Wird die Ausrichtung dieser Strömungskanäle bzw. die Hauptströmungsrichtung verändert - und der Relativwinkel zwischen beiden weicht damit von Null Grad ab -, so ergibt sich eine wesentlich gleichmäßigere Durchströmung des gesamten Gasraumes, was in diesem Fall mit einem höheren Druckabfall verbunden ist. Unerwünschte Schattenbereiche in den Eckbereichen des Gasraums können vermieden werden.

Insbesondere ist hier, d.h. bei nicht paralleler Ausrichtung, von Vorteil, wenn der Relativwinkel zwischen Strömungskanälen und Hauptströmungsrichtung im Wesentlichen 90 Grad aufweist, d.h. eine Anströmung des Strömungsmediums erfolgt quer zu diesen Strömungskanälen. Andere Relativwinkel sind ebenfalls realisierbar, beispielsweise im Wesentlichen 30 Grad, 45 Grad, 60 Grad oder 75 Grad.

Dieser erfindungsgemäß erkannte Effekt lässt sich darauf zurückführen, dass das Strömungsmedium bei Auftreffen auf nicht parallel ausgerichtete Strömungskanäle - was für dieses Strömungshindernisse darstellt - gleichmäßig in die Breite gedrückt wird, insbesondere durch Vorbeiführen des Strömungsmediums an die die Strömungskanäle ausbildenden Erhebungen an Eingangsbereichen der Strömungskanäle. Dadurch ergeben sich eine gleichmäßig breit verteilte (An-)Strömung und damit eine gleichmäßige Überströmung der aktiven Fläche einer Zelle.

Insbesondere auch durch die regelmäßige Gitterstruktur der Erhebungen, welche die (offenen) Strömungskanäle und deren Richtung bzw. deren Richtungen ausbilden, kann der Effekt einer großflächig gleichmäßigen Strömung im Gasraum erreicht werden. Die Gitterstruktur ist hierbei durch eine zweidimensionale, sich regelmäßig wiederholende Anordnung der Erhebungen gebildet, so dass in beide Raumrichtungen - in beispielsweise kartesischen oder Polarkoordinaten - eine regelmäßige Aufeinanderfolge von Erhebungen gegeben ist, deren Abstände eine Geometrie der Strömungskanäle festlegen. Anders ausgedrückt, die Erhebungen begrenzen die Strömungskanäle und legen dadurch deren Richtung bzw. deren Richtungen fest.

Bevorzugt sind dabei die die regelmäßige Gitterstruktur bildenden Erhebungen Noppen, welche insbesondere um einen Erhebungsmittelpunkt symmetrisch geformt sein können. Die Noppen können insbesondere kreisförmig oder oval geformt sein.

Durch Variation der Erhebungen, insbesondere deren Querschnitte, beispielsweise in Höhe, Breite und/oder Form, kann das vom Betriebsgas durchströmte Kanalvolumen verändert werden. Durch eine Gestaltung eines Strömungswiderstandes mit Hilfe der Größe des Kanalvolumens kann, wie beispielsweise aus der EP 1 970 985 A1 bekannt, eine Lenkung von Betriebsgas in eine Strömungsrichtung erreicht werden.

Eine vorteilhafte Lenkung des Strömungsmediums in Hinblick auf eine gleichmäßig verteilte Anströmung der aktiven Fläche kann auch erzielt werden, wenn der Strömungseinlass einen Verteilerkanal aufweist bzw. als ein Verteilerkanal ausgebildet ist, durch welchen eine gleichmäßige (Vor-)Verteilung des Strömungsmediums bzw. der Strömung in die Breite realisiert wird, beispielsweise durch entsprechende Strömungshindernisse. Ein entsprechender Kanal zur Lenkung der austretenden Strömung und zur Vergleichmäßigung der Strömung in der aktiven Fläche, ein Sammelkanal, kann auch am Strömungsauslass vorgesehen werden.

Insbesondere in Hinblick auf die gleichmäßige Strömung in der aktiven Fläche von Vorteil ist es, wenn der Verteilerkanal und/oder der Sammelkanal jeweils parallel zu einer Strömungskanalrichtung der Strömungskanäle ausgerichtet sind bzw. ist.

Insbesondere haben die Verwendung eines Verteiler- und/oder Sammelkanals auch den Vorteil, dass dadurch eine über die gesamte Zelle definierte, feste Hauptströmungsrichtung realisiert werden kann. Wo bei sonst wechselnden Hauptströmungsrichtungen und fest vorgegebener Gitterstruktur innerhalb der Zelle bessere, aber auch schlechtere Gleichverteilungen der Strömung auftreten können, kann damit eine über die gesamte Zelle gleiche, optimale Gleichverteilung realisiert werden.

Bei dem "Gleichverteilungsproblem"hängt die Gleichmäßigkeit der Strömung auch davon ab, wie sich ein Druckverlust des Strömungsmediums im Verteiler- und/oder im Sammelkanal zum Druckverlust des Strömungsmediums in der aktiven Fläche verhält. Ist der Druckverlust im Verteiler- und/oder Sammelkanal groß gegenüber dem Druckverlust in der aktiven Fläche, ergibt sich eine schlechtere Gleichverteilung; ist er klein, ergibt sich eine bessere Gleichverteilung.

Anders ausgedrückt, wird erfindungsgemäß der Widerstand der aktiven Fläche dadurch erhöht, dass das Strömungsmedium - auf Grund der von der Hauptströmungsrichtung abweichenden Richtung der Strömungskanäle in der aktiven Fläche - nicht mehr einen geraden Weg von einer Eintrittseite zu einer Austrittsseite der aktiven Fläche nehmen kann, kann der Verteiler-und/oder Sammelkanal einen höheren Strömungswiderstand aufweisen - und damit schmäler realisiert sein, ohne dass dadurch die Gleichmäßigkeit der Strömung in der aktiven Fläche verschlechtert wird. Ein schmal gebauter Verteiler- und/oder Sammelkanal erhöht in vorteilhafter Weise eine mechanische Stabilität der Zelle.

Weiterhin kann die regelmäßige Gitterstruktur derart ausgebildet sein, dass das Netz von Strömungskanälen zwei oder mehrere Strömungskanalrichtungen aufweist, deren jede relativ zu der Hauptströmungsrichtung des Strömungsmediums einen von Null Grad abweichenden Winkel einschließt. Beispielsweise kann es hier von besonderem Vorteil sein, durch ein regelmäßiges, hexagonales Gitter von Noppen erste quer zur Hauptströmungsrichtung ausgerichtete Strömungskanäle (Relativwinkel hier im Wesentlichen 90 Grad) sowie zweite und dritte Strömungskanäle jeweils unter einem 30 Grad Winkel zur Hauptströmungsrichtung (Relativwinkel hier im Wesentlichen +30 Grad bzw. -30 Grad bezüglich der Hauptströmungsrichtung) zu realisieren. Die drei Kanalrichtungen der drei Strömungskanäle schließen in diesem Fall jeweils einen 60 Grad Winkel zueinander ein.

Zweckmäßigerweise sind der Gasraum und die darin vom Betriebsgas zu überströmende aktive Fläche der elektrochemischen Zelle rechteckig, wodurch die Zelle kompakt ausgeführt werden kann. Somit lassen sich kompakte Brennstoffzellen, beispielsweise für einen mobilen Einsatz, realisieren.

In einer bevorzugten Ausführungsform ist das Strömungsmedium ein gasförmiges Medium, insbesondere ein Betriebsgas einer galvanischen Zelle, beispielsweise Wasserstoff oder Sauerstoff. Weiterhin kann vorgesehen sein, dass die elektrochemische Zelle eine galvanische Zelle, insbesondere eine Brennstoffzelle, oder eine Elektrolysezelle ist.

Die Erfindung wird anhand von Ausführungsbeispielen näher erläutert, die in den Zeichnungen dargestellt sind.

Es zeigen:
- FIG 1: einen Gasraum einer Brennstoffzelle,
- FIG 2: eine (lokale) Draufsicht auf Gaskanäle bildende Er-hebungen und deren Ausrichtung (relativ) zu einer Hauptströmungsrichtung gemäß einem ersten Ausfüh-rungsbeispiel,
- FIG 3: eine (lokale) Draufsicht auf Gaskanäle bildende Er-hebungen und deren Ausrichtung (relativ) zu einer Hauptströmungsrichtung gemäß einem weiteren Ausfüh-rungsbeispiel,
- FIG 4: ein Schnitt durch Plattenelemente mit Erhebungen und zwischen ihnen gebildete Gaskanäle,
- FIG 5: eine schematische Sicht in einen Gasraum einer Brennstoffzelle mit Sicht auf eine aktive Fläche sowie auf einen Verteiler- und einen Sammelkanal gemäß einem weiteren Ausführungsbeispiel und
- FIG 6: eine schematische (Teilan-)Sicht in einen Gasraum einer Brennstoffzelle mit Sicht auf eine aktive Fläche sowie auf einen Verteilerkanal gemäß einem weiteren Ausführungsbeispiel.

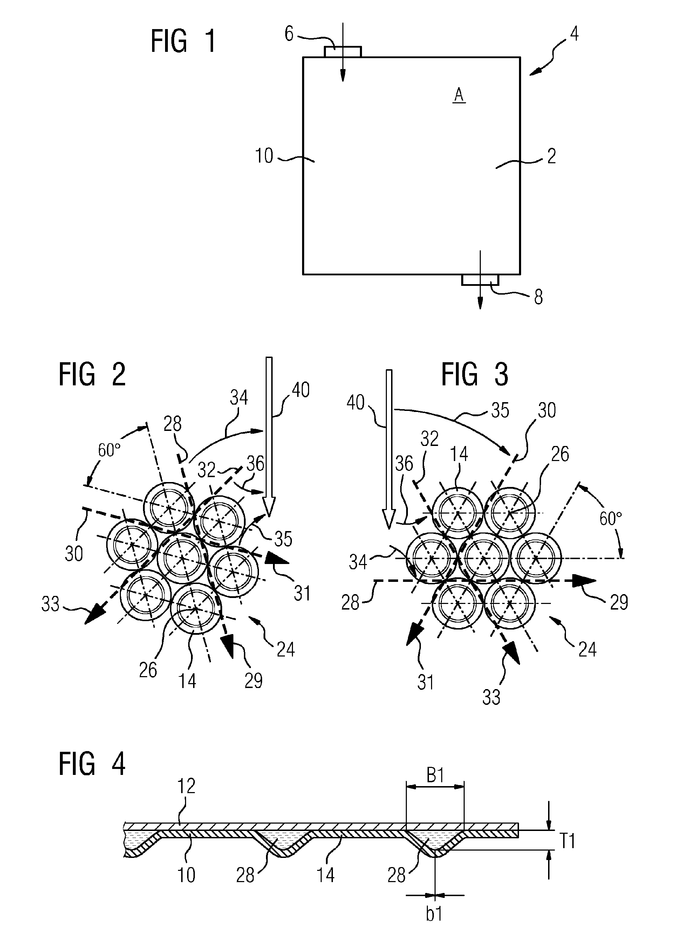

FIG 1 zeigt einen Gasraum 2 einer Brennstoffzelle 4 in einer schematischen Draufsicht.

Mit dem Gasraum 2 verbunden sind ein Gaseinlass 6 zum Einleiten von Betriebsgas in den Gasraum 2 und ein Gasauslass 8 zum Ausleiten des im Gasraum 2 nicht verbrauchten Betriebsgases und Wasser aus dem Gasraum 2.

Der Gasraum 2 wird auf seinen beiden Flachseiten begrenzt durch zwei Plattenelemente 10, 12, die in FIG 4 in einer Schnittdarstellung gezeigt sind. Das Plattenelement 10 ist metallisch und Teil einer zwei Brennstoffzellen 4 voneinander trennenden Bipolarplatte. Das Plattenelement 12 ist eine Elektrode, beispielsweise eine Anode.

Während das Plattenelement 12 im Wesentlichen flach und ohne Erhebungen ist, sind in das Plattenelement 10 eine Vielzahl von noppenförmigen Erhebungen 14 eingeprägt, die in einer lokalen Betrachtung - für ein erstes Ausführungsbeispiel - in der FIG 2 bzw. die - für ein zweites Ausführungsbeispiel - in der FIG 3 jeweils in einer Draufsicht dargestellt sind.

FIG 4 zeigt die beiden Plattenelemente 10, 12 in einer Schnittansicht. An den noppenförmigen Erhebungen 14 stützen sich die beiden Plattenelemente 10, 12 aneinander ab.

Das Plattenelement 10 - und damit der Gasraum 2 - weist einen Bereich A auf, in welchem die Erhebungen 14 in einer regelmä-βigen, hexagonalen Gitterstruktur 24 angeordnet sind. Erhebungsmittelpunkte 26 der Erhebungen 14 sind hierbei so angeordnet, dass sie die Gitterstruktur 24 bilden, wie sie für die beiden Ausführungsbeispiele in einer Draufsicht in FIG 2 und FIG 3 dargestellt sind. Die Erhebungsmittelpunkte 26 sind hierbei die geometrischen Mittelpunkte der um sie symmetrisch geformten kreisförmigen bzw. noppenförmigen Erhebungen 14.

Zwischen den Erhebungen 14 bildet sich ein Netz von den Gasraum 2 durchziehenden, offenen Gaskanälen 28, 30, 32 mit den jeweiligen Gaskanalrichtungen 29, 31, 33 aus, welche Gaskanäle 28, 30, 32 den Gaseinlass 6 mit dem Gasauslass 8 verbinden.

Zur Verdeutlichung ist das Netz der Gaskanäle 28, 30, 32 zwischen den Erhebungen 14 und deren Richtungen 29, 31, 33 in den FIGen 2, 3, 5 und 6 jeweils als Strichlinie bzw. als die Strichlinie mit Richtungspfeil dargestellt.

Weiterhin zeigen die FIGen 2 und 3 eine Hauptströmungsrichtung 40, welche durch die Richtung zwischen dem Gaseintritt 6 und dem Gasaustritt 8 bestimmt und unter welcher das Netz der Gaskanäle 28, 30, 32 mit dem Betriebsgas angeströmt wird.

Wie in FIG 4 zu sehen ist, wird das Volumen der Gaskanäle 28, 30, 32 durch die Größe der kreisförmigen Erhebungen 14 gebildet.

Wie FIG 4 weiter zeigt, sind die Gaskanäle 28 (auch 30, 32 - nicht in FIG 4 dargestellt) in diesem Fall V-förmig mit der maximalen Breite B1, der Tiefe T1 und der Kanalbodenbreite b1 - in diesem Fall - von Null. Von Null abweichende Kanalbodenbreiten b1 können auch realisiert werden.

FIGen 2 und 3 zeigen zwei Ausführungsbeispiele für die durch das Betriebsgas durchströmte regelmäßige, hexagonale Gitterstruktur 24, welche sich in relativer Ausrichtung der durch die Erhebungen 14 gebildeten Strömungskanäle 28, 30, 32 zu der Hauptströmungsrichtung 40 unterscheiden.

FIG 2 zeigt - in einer ersten Ausführungsform - die regelmäßige, hexagonale Gitterstruktur 24 mit den - durch die kreisförmigen Erhebungen 14 ausgebildeten - ersten, zweiten und dritten Strömungskanälen 28, 30, 32, welche jeweils 60 Grad zueinander einschließen.

Die Ausrichtung der Gitterstruktur 24 bezüglich der Hauptströmungsrichtung 40 ist gemäß der ersten Ausführungsform nach FIG 2 derart realisiert, dass die Richtungen 29, 31, 33 der Strömungskanäle 28, 30, 32 bezüglich der Hauptströmungsrichtung erste 34, zweite 35 und dritte Winkeln 36 von ca. 10 Grad, 70 Grad und -50 Grad einschließen (+/- Winkel: im Uhrzeigersinn/gegen Uhrzeigersinn).

Anschaulich gesehen erfolgt gemäß dieser ersten Ausführungsform - in Hinblick auf die Strömungskanäle 28 bzw. auf deren Kanalrichtung 29 - eine nicht parallele Anströmung der Gitterstruktur 24 durch das Betriebsgas.

FIG 3 zeigt - in einer zweiten Ausführungsform - wiederum die regelmäßige, hexagonale Gitterstruktur 24 mit den - durch die kreisförmigen Erhebungen 14 ausgebildeten - ersten, zweiten und dritten Strömungskanälen 28, 30, 32 und den 60 Grad - Zwischenwinkeln zwischen den Kanalrichtungen 29, 31, 33.

Die Ausrichtung der Gitterstruktur 24 bezüglich der Hauptströmungsrichtung 40 ist gemäß dieser zweiten Ausführungsform nach FIG 3 derart realisiert, dass die Richtungen 29, 31, 33 der Strömungskanäle 28, 30, 32 bezüglich der Hauptströmungsrichtung in diesem Fall erste 34, zweite 35 und dritte Winkeln 36 von ca. 90 Grad, 30 Grad und -30 Grad einschließen (+/- Winkel: im Uhrzeigersinn/gegen Uhrzeigersinn). Anschaulich gesehen erfolgt gemäß dieser zweiten Ausführungsform - in Hinblick auf die Strömungskanäle 28 bzw. auf deren Kanalrichtung 29 - eine Anströmung der Gitterstruktur 24 durch das Betriebsgas senkrecht zu diesen Kanälen 28.

Bei beiden Ausführungsformen nach den FIG 2 und 3 stellt sich gegenüber einer parallelen Anströmung der Gitterstruktur 24 - in obigem Sinne "parallel" heißt, die ersten Kanäle 28 sind parallel zur Hauptströmungsrichtung 40 ausgerichtet - durch das Betriebsgas eine gleichmäßigere Überströmung der aktiven Fläche der Zelle 4 mit insbesondere einer gleichmäßigeren Anströmung der Ecken des Gasraums - verbunden mit einem höheren Druckabfall - ein.

Dieser Effekt der verbesserten Durchströmung des Gasraumes der Zelle 4 lässt sich darauf zurückführen, dass wegen des Strömungswiderstandes, den die Erhebungen 14 bei Eintritt in die Strömungskanäle 28, 30, 32 bilden, eine gleichmäßige Verteilung der auftreffenden Strömung in die Breite erfolgt. Dadurch stellen sich eine gleichmäßig breit verteilte Strömung und damit eine gleichmäßige Überströmung der aktiven Fläche der Zelle 4 ein. Strömungsschatten in Eckbereichen der aktiven Fläche werden dadurch minimiert.

Dieser Effekt tritt - im direkten Vergleich der beiden Ausführungsformen nach den FIG 2 und 3 - verstärkt bei Ausrichtung der Gitterstruktur 24 nach FIG 3 auf, da hier die größten Abweichung bezüglich einer parallelen Kanalausrichtung bzw. Kanaldurchströmung auftreten. Der Strömungswiderstand bei Eintritt des Betriebsgases in die Kanäle 28, 30, 32 ist hier am Größten, wodurch sich die Verteilung der Strömung in der Breite am besten ausbildet.

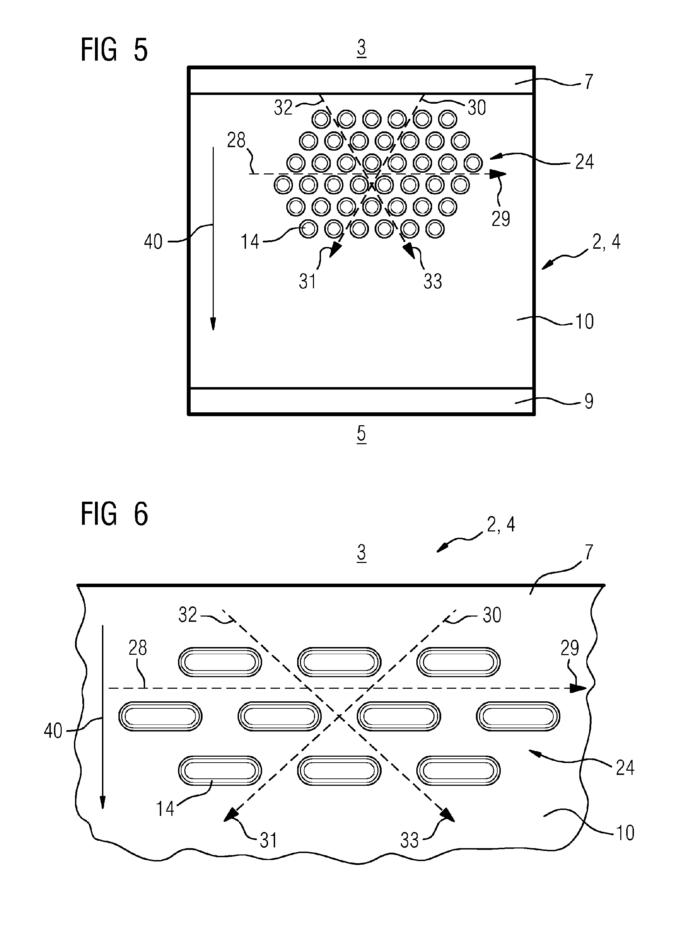

FIG 5 zeigt gemäß einer weiteren Ausführungsform den Gasraum 2 einer Brennstoffzelle 4 in einer schematischen Draufsicht auf das Plattenelement 10.

Das Plattenelement 10 - und damit der Gasraum 2 - weist eine regelmäßige, hexagonale Gitterstruktur 24 von Erhebungen 14 gemäß der Darstellung nach Fig. 3 auf, welche das Netz der Gaskanäle 28, 30 und 32 mit jeweils den Gaskanalrichtungen 29, 31 und 33 ausbilden.

Am eingangsseitigen Bereich 3 bzw. an der Einströmseite 3 des Gasraums 2 ist ein Verteilerkanal 7 angeordnet, welcher - nach Eintritt des Strömungsmediums über den Gaseinlass (6, nicht dargestellt) - eine gleichmäßige Verteilung des Strömungsmediums über die gesamte Breite des Gasraums 2 begünstigt.

Ebenfalls die gleichmäßige Verteilung des Strömungsmediums begünstigend ist am ausgangseitigen Bereich 5 bzw. an der Ausströmseite 5 des Gasraums 2 ein Sammelkanal 9 angeordnet, über welchen das Strömungsmedium nach Durchströmung der Gitterstruktur 24 gesammelt über den Gasauslass (8, nicht dargestellt) ausgeleitet wird.

Die Anordnung des Verteilerkanals 7 eingangsseitig 3 und des Sammelkanals 9 ausgangsseitig 5 ermöglicht es darüber hinaus, dass die Gitterstruktur 24 über die gesamte Breite des Gasraums 2 unter der gleichen Hauptströmungsrichtung 40 angeströmt wird. Gleiche günstige Strömungsverhältnisse über die gesamte Zelle 4 für eine feste Gitterstruktur 24 sind damit realisierbar.

Nach Verteilung des Strömungsmediums im Verteilerkanal 7 und Anströmung der Gitterstruktur 24 durch das Strömungsmedium unter der Hauptströmungsrichtung 40 durchströmt das Strömungsmedium das Netz der Gaskanäle 28, 30, 32 der Gitterstruktur 24.

Die dargestellte Ausrichtung der Gaskanäle 28, 30, 32 mit einer Kanalrichtung 29 parallel zur Einströmseite 3 sowie zur Ausströmseite 5 ermöglicht eine gleichmäßige Überströmung der aktiven Fläche der Zelle 4 mit insbesondere einer gleichmäßigeren Anströmung der Ecken des Gasraums 2 - verbunden mit einem höheren Druckabfall.

Als Folge daraus kann der Verteilerkanal 7 und der Sammelkanal 9 einen höheren Strömungswiderstand aufweisen - und damit schmäler ausgeführt werden, ohne dass dadurch die Gleichmäßigkeit der Strömung in der aktiven Fläche verschlechtert wird. Die schmälere Ausführung von Verteilerkanal 7 und Sammelkanal 9 erhöht die mechanische Stabilität der Zelle 4.

FIG 6 zeigt gemäß einer weiteren Ausführungsform einen Ausschnitt des Gasraums 2 einer Brennstoffzelle 4 in einer schematischen (Teil-)Draufsicht auf das Plattenelement 10.

Das Plattenelement 10 - und damit der Gasraum 2 - weist eine regelmäßige Gitterstruktur 24 von Erhebungen 14 auf, welche das Netz der Gaskanäle 28, 30 und 32 mit jeweils den Gaskanalrichtungen 29, 31 und 33 ausbilden. Die Erhebungen 14 gemäß dieser Ausführung nach FIG 6 unterscheiden sich nur insoweit von den Erhebungen 14 nach FIG 5 bzw. FIG 3, als dass sie oval ausgeführt sind.

Auch hier ist - wie FIG 6 zeigt - am eingangsseitigen Bereich 3 bzw. der Einströmseite 3 des Gasraums 2 ein Verteilerkanal 7 angeordnet, welcher - nach Eintritt des Strömungsmediums über den Gaseinlass (6, nicht dargestellt) - eine gleichmäßige Verteilung des Strömungsmediums über die gesamte Breite des Gasraums 2 begünstigt. Ebenfalls die gleichmäßige Verteilung des Strömungsmediums begünstigend ist - nicht dargestellt - auch hier am ausgangseitigen Bereich 5 bzw. an der Ausströmseite 5 des Gasraums 2 ein Sammelkanal 9 angeordnet, über welchen das Strömungsmedium nach Durchströmung der Gitterstruktur 24 gesammelt über den Gasauslass (8, nicht dargestellt) ausgeleitet wird.

Nach Verteilung des Strömungsmediums im Verteilerkanal 7 und Anströmung der Gitterstruktur 24 durch das Strömungsmedium unter der Hauptströmungsrichtung 40 durchströmt wie FIG 6 zeigt das Strömungsmedium das Netz der Gaskanäle 28, 30, 32 der Gitterstruktur 24.

Auch hier ist - wie FIG 6 zeigt - die dargestellte Ausrichtung der Gaskanäle 28, 30, 32 derart ausgeführt, dass die Kanalrichtung 29 parallel zur Einströmseite 3 sowie - nicht dargestellt - parallel zur Ausströmseite 5 ausgerichtet, was eine gleichmäßige Überströmung der aktiven Fläche der Zelle 4 mit insbesondere einer gleichmäßigeren Anströmung der Ecken des Gasraums 2 - verbunden mit einem höheren Druckabfall ermöglicht.

Als Folge daraus kann auch hier nach FIG 6 der Verteilerkanal 7 und der Sammelkanal 9 einen höheren Strömungswiderstand aufweisen - und damit schmäler ausgeführt werden, ohne das dadurch die Gleichmäßigkeit der Strömung in der aktiven Fläche verschlechtert wird. Die schmälere Ausführung von Verteilerkanal 7 und Sammelkanal 9 erhöht die mechanische Stabilität der Zelle 4.

## Patentansprüche

1. Elektrochemische Zelle (4) mit einem zwischen zwei Plattenelementen (10, 12) angeordneten Strömungsraum (2) mit einem Strömungseinlass (6) sowie einem Strömungsauslass (8) für ein den Strömungsraum (2) durchströmendes Strömungsmedium, wobei zwischen dem Strömungseinlass (6) und dem Strömungsauslass (8) eine Hauptströmungsrichtung (40) des Strömungsmediums ausgebildet ist und wobei eines der Plattenelemente (10) Erhebungen (14) zum Abstützen des Plattenelements (10, 12) am anderen Plattenelement (10, 12) in einer regelmäßigen Gitterstruktur (24) aufweist, zwischen denen ein Netz von den Strömungsraum (2) durchziehenden Strömungskanälen (28, 30, 32) mit zumindest einer Strömungskanalrichtung (29, 31, 33) verläuft,
**dadurch gekennzeichnet, dass** die zumindest eine Strömungskanalrichtung (29, 31, 33) der Strömungskanäle (28, 30, 32) relativ zu der Hauptströmungsrichtung (40) des Strömungsmediums einen von Null Grad abweichenden Winkel (34, 35, 36) einschließt.

2. Elektrochemische Zelle (4) nach Anspruch 1,
**dadurch gekennzeichnet, dass** die zumindest eine Strömungskanalrichtung (29, 31, 33) der Strömungskanäle (28, 30, 32) relativ zu der Hauptströmungsrichtung (40) des Strömungsmediums einen im Wesentlichen 30 Grad Winkel oder einen im Wesentlichen 60 Grad Winkel oder insbesondere einen im Wesentlichen 90 Grad Winkel einschließt.

3. Elektrochemische Zelle (4) nach mindestens einem der voranstehenden Ansprüche,
**dadurch gekennzeichnet, dass** die regelmäßige Gitterstruktur (24) derart ausgebildet ist, dass das Netz von Strömungskanälen (28, 30, 32) zwei oder mehrere Strömungskanalrichtungen (29, 31, 33) aufweist, deren jede relativ zu der Hauptströmungsrichtung (40) des Strömungsmediums einen von Null Grad abweichenden Winkel (34, 35, 36) einschließt.

4. Elektrochemische Zelle (4) nach Anspruch 3,
**dadurch gekennzeichnet, dass** eine der zwei oder mehreren Strömungskanalrichtungen (29, 31, 33) relativ zu der Hauptströmungsrichtung (40) des Strömungsmediums einen im Wesentlichen 30 Grad Winkel oder einen im Wesentlichen 60 Grad Winkel oder insbesondere einen im Wesentlichen 90 Grad Winkel einschließt.

5. Elektrochemische Zelle (4) nach mindestens einem der voranstehenden Ansprüche,
**dadurch gekennzeichnet, dass** die die regelmäßige Gitterstruktur (24) bildenden Erhebungen (14) Noppen sind, welche insbesondere um einen Erhebungsmittelpunkt (26) symmetrisch geformt sind.

6. Elektrochemische Zelle (4) nach mindestens dem voranstehenden Anspruch,
**dadurch gekennzeichnet, dass** die Noppen (14) im Wesentlichen kreisförmig oder oval geformt sind.

7. Elektrochemische Zelle (4) nach mindestens einem der voranstehenden Ansprüche,
**dadurch gekennzeichnet, dass** der Strömungseinlass (6) einen Verteilerkanal (7) und/oder der Strömungsauslass (8) einen Sammelkanal (9) aufweisen bzw. aufweist.

8. Elektrochemische Zelle (4) nach mindestens dem voranstehenden Anspruch,
**dadurch gekennzeichnet, dass** der Verteilerkanal (7) und/oder der Sammelkanal (9) jeweils parallel zu einer Strömungskanalrichtung (29, 31, 33) der Strömungskanäle (28, 30, 32) ausgerichtet sind bzw. ist.

9. Elektrochemische Zelle (4) nach mindestens einem der voranstehenden Ansprüche,
**dadurch gekennzeichnet, dass** das Strömungsmedium ein gasförmiges Medium, insbesondere ein Betriebsgas einer galvanischen Zelle, ist.

10. Elektrochemische Zelle (4) nach mindestens einem der voranstehenden Ansprüche,
**dadurch gekennzeichnet, dass** die elektrochemische Zelle (4) eine galvanische Zelle, insbesondere eine Brennstoffzelle, oder eine Elektrolysezelle ist.
